# EUROPÄISCHE PATENTANMELDUNG

(11) **EP 1 493 325 A1**
(43) Veröffentlichungstag der Anmeldung: **05.01.2005**
(21) Anmeldenummer: 04015482.5
(22) Anmeldetag: 01.07.2004
(51) Int. Cl.: A01D 78/10, A01B 73/06

(54) **Heuwerbungsmaschine**

(30) Priorität: 04.07.2003 DE 10330384
(71) Anmelder: Maschinenfabrik Bernard Krone GmbH, 48480 Spelle (DE)
(72) Erfinder: Krone, Bernard, Dr.-Ing. E.h., 48480 Spelle (DE); Horstmann, Josef, Dr.-Ing., 49479 Ibbenbüren (DE)

(57) **Zusammenfassung**

Die Erfindung bezieht sich auf eine Heuwerbungsmaschine 1, insbesondere zum Zetten und Wenden von Halmgut, mit an Maschinenbalken 9, 11 angeordneten und über Stützräder 17 auf dem Boden abstützbaren Arbeitskreiseln 15, wobei seitlich neben einem zentralen Maschinenbalken 13 vorgesehene seitliche Maschinenbalken 9, 11 aus einer sich beispielsweise quer zur Fahrtrichtung 7 erstreckenden Arbeitsstellung in eine in etwa parallel zur Arbeitsfahrtrichtung 7 verschwenkte Transportstellung überführbar sind. Um eine derartige Heuwerbungsmaschine 1 mit großer Arbeitsbreite und mit verbesserter Fahrstabilität in der Transportstellung vorsehen zu können, ist vorgesehen, daß die Heuwerbungsmaschine 1 wenigstens eine Stabilisierungsverbindung 23 aufweist, die die seitlichen Maschinenbalken 9, 11 in der Transportstellung miteinander stabilisierend verbindet.

## Beschreibung

Die Erfindung betrifft eine Heuwerbungsmaschine, insbesondere zum Zetten und Wenden von Halmgut, mit an Maschinenbalken angeordneten und über Stützräder auf dem Boden abstützbaren Arbeitskreiseln, wobei seitlich neben einem zentralen Maschinenbalken vorgesehene seitliche Maschinenbalken aus einer sich beispielsweise quer zur Fahrtrichtung erstreckenden Arbeitsstellung in eine in etwa parallel zur Fahrtrichtung verschwenkte Transportstellung überführbar sind.

Eine derartige Heuwerbungsmaschine ist aus der DE 40 08 648 A1 bekannt. Bei dieser Heuwerbungsmaschine sind beidseits eines zentralen Maschinenbalkens seitliche Maschinenbalken angeordnet, die von einer sich quer zur Fahrtrichtung erstreckenden Arbeitsstellung in eine parallel zur Fahrtrichtung verschwenkte Transportstellung verschwenkbar sind. Im Bereich der Schwenkachsen angeordnete Verriegelungsvorrichtungen stabilisieren die seitlichen Maschinenrahmen sowohl in der Arbeitsstellung als auch in der verschwenkten Transportstellung. Die Verriegelungsvorrichtung wird über einen Riegelhalter und einen innengeführten Teil des Riegelhalters bedient. Insbesondere bei größeren Arbeitsbreiten der Heuwerbungsmaschine und entsprechend längeren seitlichen Maschinenbalken ist die Stabilisierung der seitlichen Maschinenbalken in der Transportstellung aufgrund der extremen Hebelwirkung oft nicht ausreichend. Während der Fahrt der Heuwerbungsmaschine in der Transportstellung schwenken die seitlichen Maschinenbalken unkontrolliert quer zur Fahrtrichtung hin und her. Dies führt zu einer deutlich instabilen Straßenlage.

Des weiteren ist eine Heuwerbungsmaschine der vorgenannten Art aus der DE 37 17 307 A1 bekannt, bei der ein ähnlich aufgebauter Verriegelungsmechanismus über Sperrriegel für die Arbeitsstellung und Sperrriegel für die Transportstellung die seitlichen Maschinenbalken gegen ein Verschwenken sichert und die Sperrriegel mit Hilfe eines einzigen Stellmittels angelenkt werden können. Auch bei dieser Heuwerbungsmaschine kann ein Verschwenken der seitlichen Maschinenbalken während einer Fahrt in der Transportstellung bei größeren Arbeitsbreiten der Heuwerbungsmaschine aus den bereits aufgezeigten Gründen mit den ebenfalls bereits dargelegten Nachteilen nicht verhindert werden.

Der Erfindung liegt die Aufgabe zugrunde, eine Heuwerbungsmaschine mit großer Arbeitsbreite mit verbesserter Fahrstabilität in der Transportstellung zu schaffen.

Zur Lösung dieser Aufgabe zeichnet sich die Heuwerbungsmaschine der eingangs genannten Art dadurch aus, daß sie wenigstens eine Stabilisierungsverbindung aufweist, die die seitlichen Maschinenbalken in der Transportstellung miteinander stabilisierend verbindet.

Durch die Stabilisierungsverbindung entsteht ein die seitlichen Maschinenbalken stabilisierendes Viereck, wobei zwei Seiten des Vierecks von Teilabschnitten der seitlichen Maschinenbalken und je eine Seite von dem zentralen Maschinenbalken und der Stabilisierungsverbindung gebildet werden. Eine Relativbewegung der seitlichen Maschinenbalken aufeinander zu oder voneinander weg während einer Fahrt der Heuwerbungsmaschine in der Transportstellung kann hierdurch auch bei sehr großen Arbeitsbreiten und entsprechend langen seitlichen Maschinenbalken weitgehend verhindert werden. Hierdurch ist die Fahrstabilität der Heuwerbungsmaschine in der Transportstellung erheblich verbessert.

Je nach Ausbildung der Heuwerbungsmaschine kann das Abstandsmaß der Stabilisierungsverbindung zum zentralen Maschinenbalken unterschiedlich gewählt werden. Eine bevorzugte Ausgestaltung der Erfindung sieht vor, daß dieses Abstandsmaß größer als ein Drittel des Abstandsmaßes zwischen dem entgegen der Fahrtrichtung gelegenen Ende eines der seitlichen Maschinenbalken und dem zentralen Maschinenbalken ist.

Die Stabilisierungsverbindung weist vorzugsweise ein erstes Verbindungselement und ein weiteres in der Transportstellung auf das erste weisendes Verbindungselement sowie eine diese lösbar miteinander verbindende Verbindungsvorrichtung auf. Hierbei sind die Verbindungselemente bevorzugt an den seitlichen Maschinenbalken angeordnet. Die Verbindungsvorrichtung kann dabei sowohl in etwa mittig zwischen den beiden seitlichen Maschinenbalken als auch zu einem seitlichen Maschinenbalken hin versetzt angeordnet sein. Ebenso ist es möglich, daß die Verbindungsvorrichtung direkt an einem der seitlichen Maschinenbalken angeordnet ist. In diesem Fall entspricht ein Teilbereich des seitlichen Maschinenbalkens oder aber die Verbindungsanordnung der Verbindungsvorrichtung an dem seitlichen Maschinenbalken einem der Verbindungselemente.

Eine mögliche Ausgestaltung der Erfindung sieht vor, daß die Stabilisierungsverbindung bzw. genauer die Verbindungselemente der Stabilisierungsverbindung über Flanschverbindungen mit zumindest einer elastischen Zwischenlage an den seitlichen Maschinenbalken befestigt sind. Die elastische Zwischenlage kann dabei als eine zusammenhängende Lage im Bereich der gesamten Flanschverbindung oder aber in mehrere insbesondere um die Schraubverbindungen der Flansche angeordnete, voneinander getrennte Bereiche ausgebildet sein. Die elastische Zwischenverbindung erleichtert das Verbinden der beiden Verbindungselemente während der Überführung der seitlichen Maschinenbalken von der Arbeitsstellung in die Transportstellung, da hierdurch eine unterschiedliche Höhe der seitlichen Maschinenbalken ausgeglichen werden kann. Zudem lässt die elastische Zwischenlage eine Höhenbewegung der seitlichen Maschinenbalken relativ zueinander im verbundenen Zustand der Verbindungselemente in der Transportstellung zu. Die Höhenbewegungen relativ zueinander ergeben sich aus Unebenheiten des Bodens während der Fahrt der Heuwerbungsmaschine in der Transportstellung. Die Stabilisierungsverbindung kann mit Hilfe der elastischen Zwischenlagen die Funktion einer pendelnden Achse übernehmen. Die gewählte Dicke der Zwischenlage und die elastischen Eigenschaften des Materials beziehungsweise überhaupt die Ausführung der elastischen Anbringung der Verbindungselemente, werden dabei in Abhängigkeit von der Ausbildung der Heuwerbungsmaschine und der Positionierung der Stabilisierungsverbindung bzw. der Verbindungselemente gewählt.

Besonders vorteilhaft ist die Verbindungsvorrichtung dergestalt ausgebildet, daß an dem ersten Verbindungselement ein Gelenkbolzen angeordnet ist und an dem weiteren Verbindungselement in der Transportstellung ein Halteelement und diesem gegenüberliegend ein Arretierelement angeordnet sind. In der Transportstellung der Teile greift der Gelenkbolzen in das Halteelement und das Arretierelement die Verbindungselemente verbindend ein.

Die Heuwerbungsmaschine weist bevorzugt eine erhöhte Anzahl von Arbeitskreiseln mit jeweils geringerem Kreiseldurchmesser auf. Hierdurch sind pro Kreisel geringere Mengen von Halmgut zu verarbeiten, wodurch sich die Qualität insbesondere auch von zu Futtermittel zu verarbeitendem Halmgut verbessern lässt. Durch den geringen Kreiseldurchmesser ist darüber hinaus der Streuwinkel positiv beeinflusst und die Menge nicht aufgenommenen Halmguts deutlich verringert. Solche kleineren Arbeitskreiseldurchmesser lassen sich besonders gut realisieren, wenn die Lage der vertikalen Schwenkachsen der beiden seitlichen Maschinenbalken so gewählt ist, daß das Abstandsmaß C zwischen den inneren Arbeitskreiseln in der Arbeitsstellung sich bei der Überführung der seitlichen Maschinenbalken in die Transportstellung vergrößert.

Weitere Vorteile und Einzelheiten der Erfindung ergeben sich aus den Unteransprüchen und den in den Zeichnungen schematisch dargestellten Ausführungsbeispielen; es zeigen:
- Fig. 1: eine erfindungsgemäße Heuwerbungsmaschine in der Draufsicht in der Arbeitsstellung ihrer Teile,
- Fig. 2: eine Heuwerbungsmaschine nach Fig 1 in der Transportstellung ihrer Teile,
- Fig. 3: eine Ausschnittsvergrößerung einer erfindungsgemäßen Verbindungsvorrichtung im verbindenden Zustand in dreidimensionaler Darstellung,
- Fig. 4: eine Verbindungsvorrichtung nach Fig. 3 im gerade gelösten Zustand,
- Fig. 5: eine Verbindungsvorrichtung nach Fig. 3 im nicht verbindenden Zustand und
- Fig. 6: ein Schaltbild der Steuerungsvorrichtung für automatische Abläufe der Maschinenbedienung.

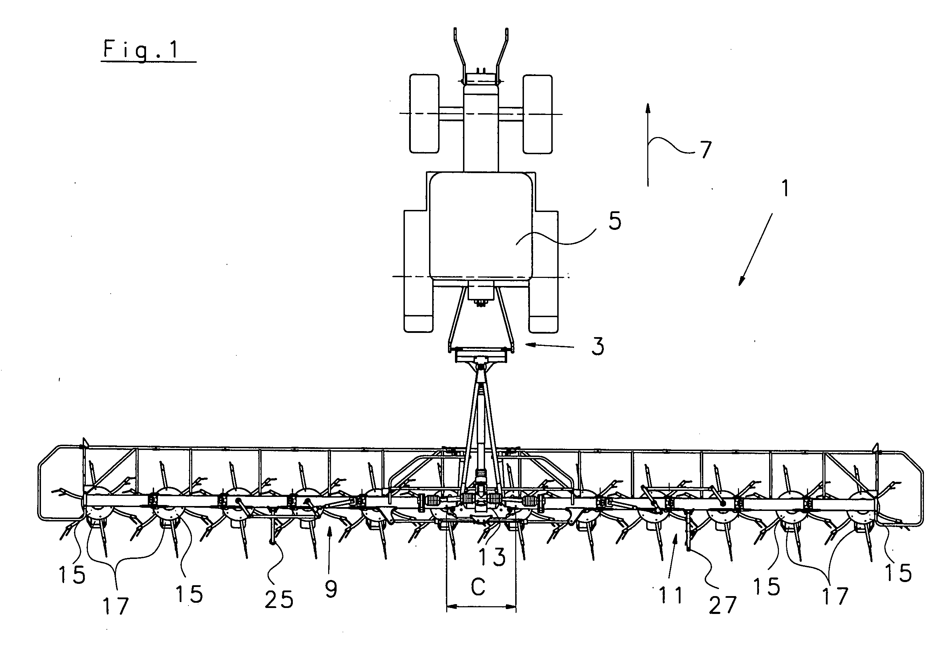

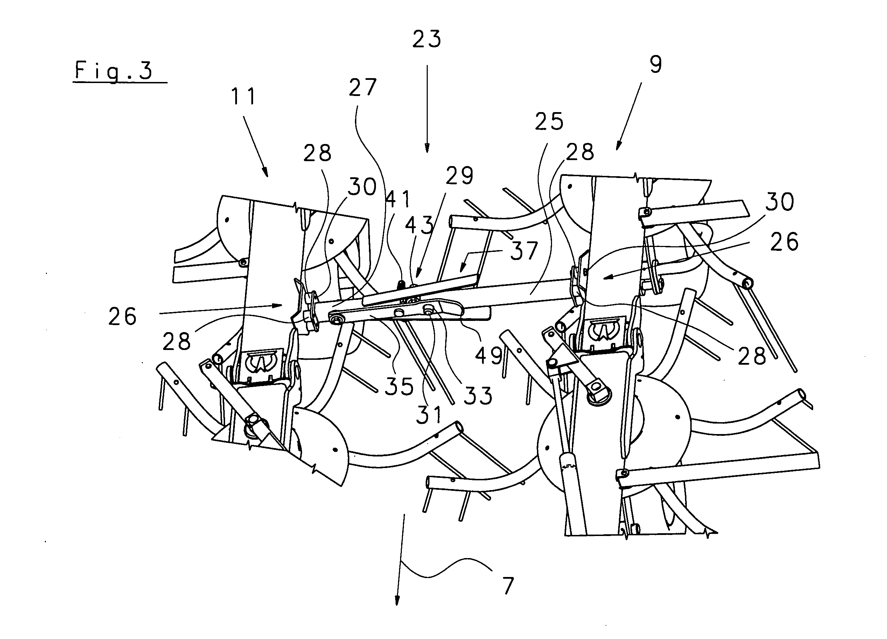

In Fig. 1 ist eine erfindungsgemäße Heuwerbungsmaschine 1 dargestellt, die an übliche Koppelpunkte 3 eines Schleppers 5 angeordnet ist und von dem Schlepper 5 in eine Fahrtrichtung 7 gezogen wird. An seitlichen Maschinenbalken 9 und 11 und einem dazwischen angeordneten zentralen Maschinenbalken 13 sind Arbeitskreisel 15 angeordnet, die über Stützräder 17 auf dem Boden abstützbar sind. Das Abstandsmaß C zwischen den Vertikalmittelachsen der beiden in Arbeitsstellung inneren Arbeitskreiseln 15 (Fig.1) ist in der Transportstellung (Fig. 3) vergrößert. Bevorzugtermassen ist hier ein Abstandsmaß C in der Transportstellung vorgesehen, das 110 bis 130 % des Abstandsmaßes C in der Arbeitsstellung beträgt. Damit lässt sich der Freiraum unterhalb der Arbeitskreisel 15 für ein Stützrad 17 optimal nutzen. Zudem sind die Fahreigenschaften optimiert.

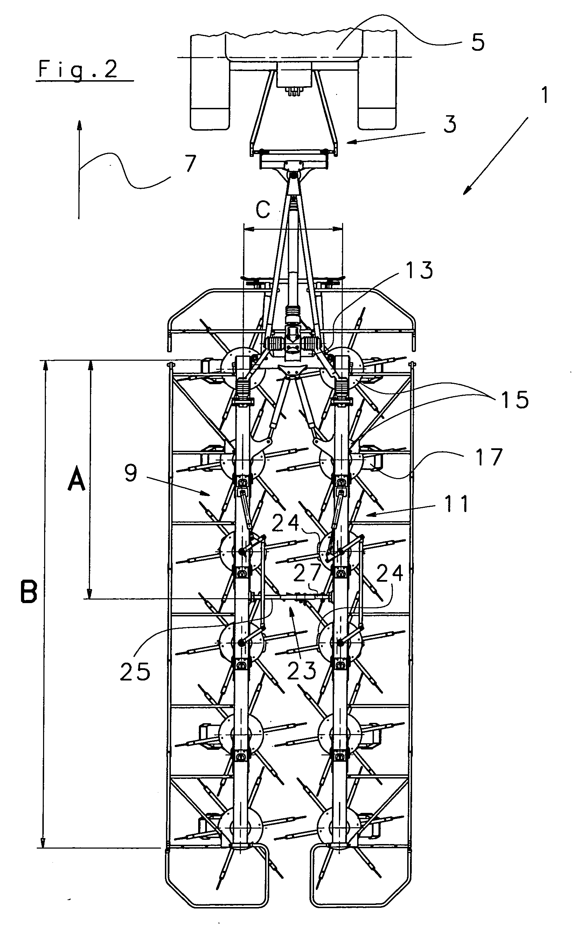

In der in Fig. 2 dargestellten Transportstellung der Teile sind die seitlichen Maschinenbalken 9 und 11 über eine Stabilisierungsverbindung 23 miteinander stabilisierend verbunden. Die Heuwerbungsmaschine weist in dem dargestellten Ausführungsbeispiel gelenkte Stützräder 24 auf. Eine bevorzugte Ausgestaltung der Erfindung sieht vor, die Stabilisierungsverbindung 23 im Bereich der gelenkten Stützräder 24 anzuordnen. Die Länge der Stabilisierungsverbindung 23 ist zweckmäßigerweise so gewählt, daß sie eine in etwa parallele Anordnung der seitlichen Maschinenbalken 9 und 11 zueinander ermöglicht. Eine bevorzugte Ausgestaltung der Erfindung sieht vor, daß das Abstandsmaß A der Stabilisierungsverbindung 23 zum zentralen Maschinenbalken 13 größer als ein Viertel des Abstandsmaßes B zwischen dem entgegen der Fahrtrichtung gelegenen Ende eines der seitlichen Maschinenbalken 9 oder 11 und dem zentralen Maschinenbalken 13 ist.

Die Stabilisierungsverbindung 23 ist in Fig. 3 bis 5 in verschiedenen Stadien der Verbindung dargestellt. Die Stabilisierungsverbindung 23 weist ein erstes Verbindungselement 25 und ein weiteres in der Transportstellung auf das erste weisendes Verbindungselement 27 sowie eine diese lösbar miteinander verbindende Verbindungsvorrichtung 29 auf. Die Verbindungselemente 25 und 27 sind einenends an den seitlichen Maschinenbalken 9 und 11 angeordnet. Die Verbindung mit den seitlichen Maschinenbalken 9 und 11 erfolgt vorzugsweise über Flanschverbindungen 26 mit einer elastischen Zwischenlage 28. Diese kann dabei als eine zusammenhängende Lage im Bereich der gesamten Flanschverbindung 26 oder aber in mehrere insbesondere um Schraubverbindungen 30 der Flanschverbindung 26 angeordnete, voneinander getrennte Bereiche ausgebildet sein. Zur Anbringung der Verbindungselemente 25, 27 an den seitlichen Maschinenbalken 9, 11 sind aber auch alle anderen Verbindungen denkbar, die bei einer definierten Mittelstellung die notwendige Beweglichkeit der Verbindungselemente 25,27 ermöglichen.

Im verbundenen Zustand (Fig. 3) greift ein an dem ersten Verbindungselement 25 angeordneter Gelenkbolzen 31 in eine Ausnehmung 33 eines an dem weiteren Verbindungselement 27 angeordneten Arretierelements 35 ein. Mit Hilfe eines ebenfalls an dem weiteren Verbindungselement 27 angeordneten Halteelements 37 wird ein Herausgleiten des Gelenkbolzens 31 aus der Ausnehmung 33 des Arretierelements 35 verhindert. Hierzu greift der Gelenkbolzen 31 anderenends in einen Aufnahmeraum 39 des Halteelements 37 ein.

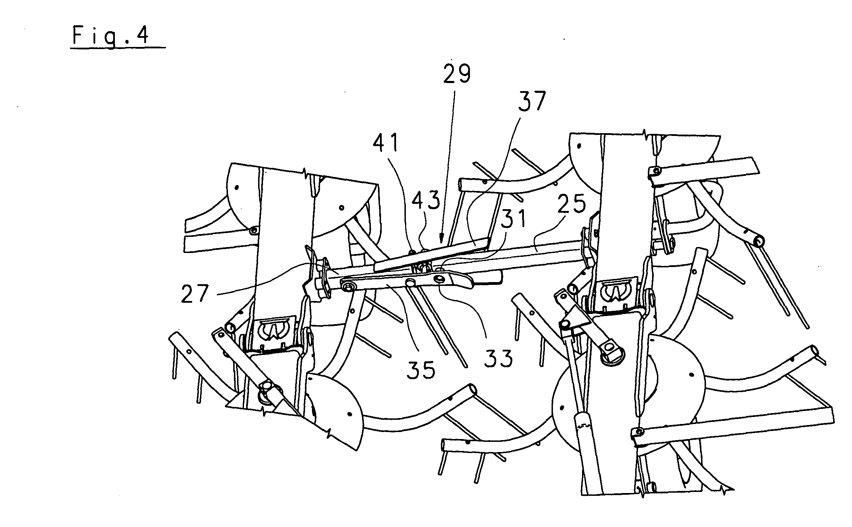

Das Arretierelement 35 wird mit Hilfe eines Kraftelements, z. B. einer Feder 41, in Richtung des Halteelements 37 kraftbeaufschlagt und wird mit einem minimalen Abstand zum Halteelement 37, der von der Dicke des weiteren Verbindungselements 27 vorgegeben ist, gehalten. Das Halteelement 37 ist dabei fest mit dem weiteren Verbindungselement 27 verbunden. Es ist jedoch durchaus möglich, das Arretierelement 35 mit dem weiteren Verbindungselement 27 fest verbunden und das Halteelement 37 gegenüber diesem beabstandbar auszubilden. Um z.b. in diesem Fall ein leichteres Einrasten des Gelenkbolzens 31 in die Ausnehmung 33 zu ermöglichen, kann der Gelenkbolzen 31 relativ zum ersten Verbindungselement 25 beweglich angeordnet sein. Zum Lösen der Verriegelung der beiden Verbindungselemente 25 und 27 voneinander (Fig. 4) ist das Arretierelement 35 entgegen der Kraft der Feder 41 mit Hilfe eines Hydraulikzylinders 43 von dem Halteelement 37 entfernbar, das heißt der Abstand zwischen dem Halteelement 37 und dem Arretierelement 35 ist mit Hilfe des Hydraulikzylinders 43 vergrößerbar. Es ist jedoch ebenso vorsehbar, die Feder 41 so zu positionieren, daß diese das Arretierelement 35 von dem Halteelement 37 wegdrückt oder - zieht und der Hydraulikzylinder 43, der Federkraft wiederum entgegenwirkend, das Arretierelement 35 in Richtung des Halteelements 37 zieht. Diese Ausgestaltung ist in den Zeichnungen nicht dargestellt. Anstelle eines einseitig wirkenden Hydraulikzylinders 43 und einer diesem entgegenwirkenden Feder 41 kann auch ein doppelseitig wirkender Hydraulikzylinder, der in den Zeichnungen nicht dargestellt ist, verwendet werden.

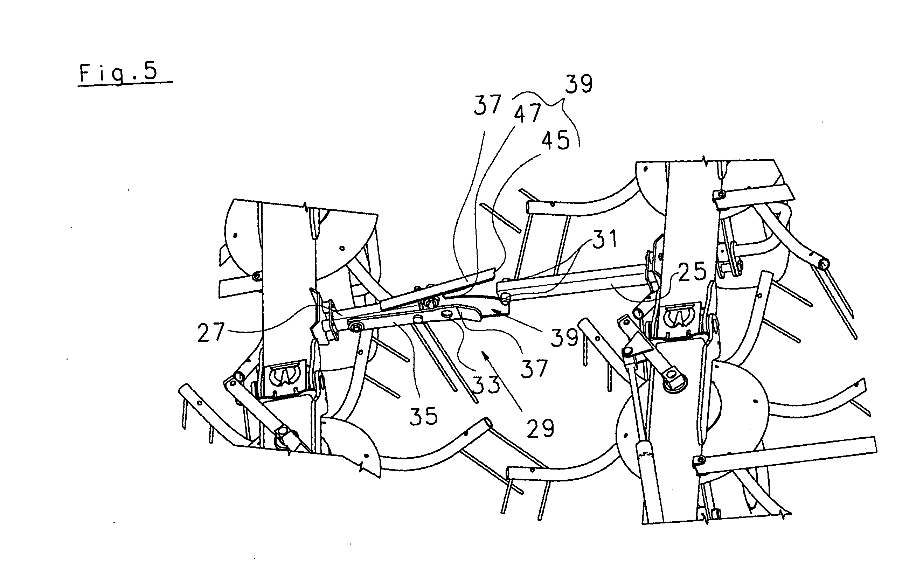

In Fig. 5 ist die Ausgestaltung des Aufnahmeraums 39 des Halteelementes 37 deutlicher zur sehen. Der Gelenkbolzen 31 wird während des Verbindens von einer maulartig erweiterten Öffnung 45 des Aufnahmeraums 39 eingefangen und in einen Lagerbereich 47 geführt. Die maulartige Öffnung 45 des Aufnahmeraums 39 ermöglicht eine Überführung der Verbindungselemente 25 und 27 von dem nicht verbunden Zustand in den verbundenen Zustand ohne direktes Eingreifen von Hand in dem unter Sicherheitsaspekten kritischen Bereich auch unter schwierigen Bedingungen in der Praxis. Ebenfalls zum besseren Einfangen des Gelenkbolzens 31 weist das Arretierelement 35 dem Gelenkbolzen 31 zugewandt eine abgewinkelte Führung 49 auf.

Der Durchmesser des Lagerbereichs 47 des Aufnahmeraums 39 ist etwas größer als der Durchmesser des Gelenkbolzens 31 ausgebildet und liegt der Ausnehmung 33 des Arretierelements 35 vorzugsweise unmittelbar gegenüber.

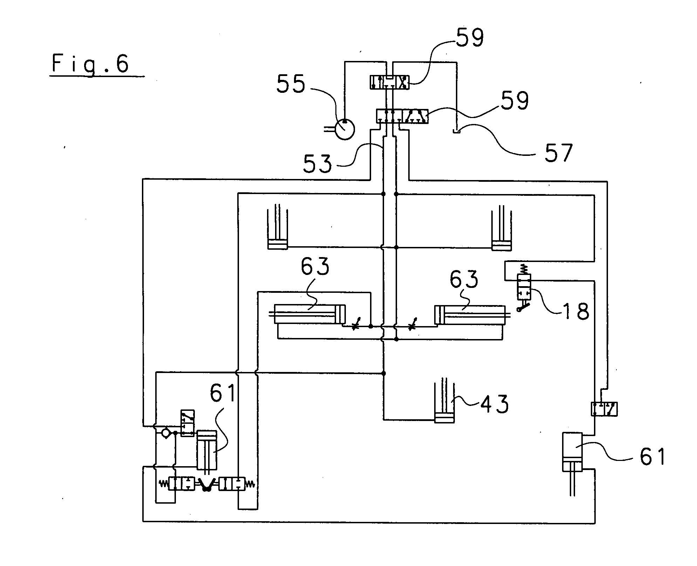

Die Verriegelung und Entriegelung der Verbindungsvorrichtung 29 mit Hilfe des Hydraulikzylinders 43 erfolgt vorzugsweise durch eine Folgesteuerung, welche von einer bedienfreundlichen Position z.b. der Fahrerkabine aus ausgelöst wird. Fig. 6 zeigt ein Schaltbild der Steuerungsvorrichtung zum automatischen Entriegeln der Verbindungsvorrichtung 29. Zur Überführung der Teile von der Transport- in die Arbeitsstellung wird die Leitung 53 über die Pumpe 55 mit zugehörigem Tank 57 und entsprechender Ansteuerung einer Ventilanordnung 59 mit Druck beaufschlagt. Hierdurch wird der Hydraulikzylinder 43 der Verbindungsvorrichtung 29 betätigt, der dann das Arretierelement 35 ( Fig. 3-5) entgegen der Kraft der Feder 41 von dem Halteelement 37 wegdrückt und den Gelenkbolzen 31 freigibt. Die Druckbeaufschlagung des Hydraukikzylinders 43 ist der Beginn einer sich automatisch fortsetzenden Abfolge weiterer Druckbeaufschlagungen von Stellgliedern. So werden unter anderem die als Lenkräder ausgebildete Stützräder 24 über Lenkzylinder 61 gesteuert und die Bewegung der seitlichen Maschinenbalken 9 und 11 in die Arbeitsstellung durch Schwenkzylinder 63 bewirkt.

Umgekehrt wird beim Verschwenken der seitlichen Maschinenbalken 9 und 11 von der Arbeitsstellung in die Transportstellung der Hydraulikzylinder 43 nicht mit Druck beaufschlagt und der Gelenkbolzen 33 rastet in die Ausnehmung 41 des gefederten Arretierelements 35 ein. Die Feder 41 kraftbeaufschlagt anschließend das Arretierelement 35 in Richtung des Halteelements 37 und sichert den Gelenkbolzen 33 gegen ein Herausrutschen aus der Ausnehmung 33.

## Patentansprüche

1. Heuwerbungsmaschine (1), insbesondere zum Zetten und Wenden von Halmgut, mit an Maschinenbalken (9, 11) angeordneten und über Stützräder (17) auf dem Boden abstützbaren Arbeitskreiseln (15), wobei seitlich neben einem zentralen Maschinenbalken (13) vorgesehene seitliche Maschinenbalken (9, 11) aus einer sich beispielsweise quer zur Fahrtrichtung (7) erstreckenden Arbeitsstellung in eine in etwa parallel zur Fahrtrichtung (7) verschwenkte Transportstellung überführbar sind, **dadurch gekennzeichnet, daß** die Heuwerbungsmaschine (1) wenigstens eine Stabilisierungsverbindung (23) aufweist, die die seitlichen Maschinenbalken (9, 11) in der Transportstellung miteinander stabilisierend verbindet.

2. Heuwerbungsmaschine nach Anspruch 1, **dadurch gekennzeichnet, daß** die Stabilisierungsverbindung (23) ein erstes Verbindungselement (25) und ein weiteres in der Transportstellung auf das erste weisendes Verbindungselement (27) sowie eine diese lösbar miteinander verbindende Verbindungsvorrichtung (29) aufweist, wobei die Verbindungselemente (25, 27) an den seitlichen Maschinenbalken (9, 11) angeordnet sind.

3. Heuwerbungsmaschine nach Anspruch 2, **dadurch gekennzeichnet, daß** die Verbindungsvorrichtung (29) einen an dem ersten Verbindungselement (25) angeordneten Gelenkbolzen (31) sowie ein an dem weiteren Verbindungselement (27) angeordnetes Halteelement (37) und ein diesem gegenüberliegendes Arretierelement (35) umfasst, in die der Gelenkbolzen (31) in der Transportstellung die Verbindungselemente (25, 27) miteinander verbindend eingreift.

4. Heuwerbungsmaschine nach Anspruch 3, **dadurch gekennzeichnet, daß** das Arretierelement (35) durch ein Kraftelement, insbesondere eine Feder (41), in Richtung des Halteelements (37) kraftbeaufschlagt ist und durch ein Stellglied, insbesondere einen Hydraulikzylinder (43), von dem Halteelement (37) wegbewegbar ist.

5. Heuwerbungsmaschine nach einem der Ansprüche 3 oder 4, **dadurch gekennzeichnet, daß** das Arretierelement (35) eine Ausnehmung (33) aufweist, in die der Gelenkbolzen (31) einrastbar ist.

6. Heuwerbungsmaschine nach einem der Ansprüche 3 bis 5, **dadurch gekennzeichnet, daß** das Halteelement (37) einen Aufnahmeraum (39) mit einer dem Gelenkbolzen (31) zugewandten Öffnung (45) umfasst.

7. Heuwerbungsmaschine nach einem der Ansprüche 3 bis 6, **dadurch gekennzeichnet, daß** der Durchmesser des ersten Verbindungselements (25) im Bereich des Gelenkbolzens (31) zumindest bereichsweise kleiner ist als der minimale Abstand zwischen dem Halteelement (37) und dem Arretierelement (35).

8. Heuwerbungsmaschine nach einem der vorhergehenden Ansprüche, **dadurch gekennzeichnet, daß** die Stabilisierungsverbindung (23) jeweils über Flanschverbindungen (26) mit zumindest einer elastischen Zwischenlage (28) mit den seitlichen Maschinenbalken (9, 11) verbunden ist.

9. Heuwerbungsmaschine nach einem der vorhergehenden Ansprüche, **dadurch gekennzeichnet, daß** das Abstandsmaß A zwischen der Stabilisierungsverbindung (23) und dem zentralen Maschinenbalken (13) mehr als 25 % des Abstandsmaßes B zwischen dem entgegen der Fahrtrichtung gelegenen Ende eines der seitlichen Maschinenbalken (9, 11) und dem zentralen Maschinenbalken (13) beträgt.
